Europäisches Patentamt

European Patent Office

Office européen des brevets

(11) Publication number: **0 551 515 A1**

## EUROPEAN PATENT APPLICATION
### published in accordance with Art. 158(3) EPC

(21) Application number: 91914202.6

(22) Date of filing: 13.08.91

(86) International application number:
PCT/JP91/01075

(87) International publication number:
WO 93/04294 (04.03.93 93/06)

(51) Int. Cl.5: **F16D 41/06, F16F 15/10**

(43) Date of publication of application:
**21.07.93 Bulletin 93/29**

(84) Designated Contracting States:
**AT CH DE ES FR GB GR IT LI NL SE**

(71) Applicant: **TAKATA, Nobuo**
**87, Kurotani 5-chome**
**Yao-shi, Osaka 581(JP)**

(72) Inventor: **TAKATA, Nobuo**
**87, Kurotani 5-chome**
**Yao-shi, Osaka 581(JP)**

(74) Representative: **Kerkhof, Marianne et al**
**Menzelstrasse 40**
**W-7000 Stuttgart 1 (DE)**

(54) COUPLING TO ABSORB TORQUE VARIATION.

(57) A coupling to absorb torque variation provided with: an inner race (1) having an inner raceway surface (1a) in the form of a univalent hyperboloid of revolution; an outer race (2) having an outer raceway surface (2a) in the form of a univalent hyperboloid of revolution likewise; a cylindrical roller (3) obliquely disposed between said surfaces for rotation; a power transmitting rotating body (14) connected to the outer race (2) so as to be capable of receiving torque transmitted therefrom; and energizing means (7) disposed between the outer race (2) and the power transmitting rotating body (14).

FIG. 2

(Industrial Field of Application)

This invention relates to a torque variation absorbing coupling which can absorb torque variation caused by torsional vibration and other factors.

(Prior Art)

Torsional vibration absorbing dampers or other torque variation absorbing couplings are often provided in a power transmission system of prime movers including diesel engines, vibration sieves and other devices which may generate torque fluctuation or torsional vibration due to torque fluctuation.

In general, such dampers absorb or change mechanical vibration energy into thermal energy by frictional force to be generated between energy absorbing members, oil hydraulic resistance to be generated when oil in the damper is scraped, or by internal friction of a single piece of rubber deformed.

However, such dampers normally have not only a large size occupying a substantial space or a complicated system, but also rubber or other shock absorbing materials may be subject to aging, thus resulting in a limited service life.

On the other hand, flexible couplings with common rubber ring thereinside may be small-sized, thus occupying a relatively small space, but cannot absorb a large torque variation or torsional vibration.

(Problems to be Solved by the Invention)

According to the prior art, however, the dampers and the flexible couplings have suffered from the above described problems. In view of the above problems, the present invention as claimed in claim 1 intends to provide a small-sized and simple-designed torque variation absorbing coupling which can absorb a large torque variation with long service life to transmit power to a one-way rotational direction.

In addition to the above, the present invention as claimed in claim 2 intends to provide a torque varitation absorbing coupling which can transmit power to two-way (normal and reverse) rotational directions.

(Means for Solving the Problems)

To solve the above problems, a torque variation absorbing coupling as claimed in claim 1 according to the present invention comprises as follows:

an inner rotation body, an outer rotation body, a plurality of intermediate rotation bodies, an energizing means and a power transmission rotation body are provided; and

the inner rotation body is provided with an inner raceway track of mono-hyperboloid of revolution about one axis;

the outer rotation body is provided with an outer raceway track of mono-hyperboloid of revolution about the axis;

the inner raceway track and the outer raceway track are oppositely faced with each other to form a raceway;

the center axis of the intermediate rotation bodies with a cylindrical rolling surface is arranged in a circumferential direction of the raceway at an angle to a cross section including the axis, and the surface of the intermediate rotation bodies is arranged so as to come into linear contact with the inner raceway track and the outer raceway track;

the power transmission rotation body is arranged on one end side of the outer rotation body and around the end side of the inner rotation body through a bearing, so as to be rotatable relative to the inner rotation body while keeping a constant axial position relative to the inner rotation body, and is connected with the outer rotation body by a torque transmission means which transmits a torque between the outer rotational body;

the energizing means is arranged between the power transmission rotation body and the outer rotation body, to energize the outer rotation body in the axial direction so as to narrow down the spacing of the raceway; and

the inner rotation body or the outer rotation body is provided with a ringlike portion which brings to a stop the movement of the intermediate rotation body in the axial direction so as to widen the spacing of the raceway.

Further, a torque variation absorbing power transmission system as claimed in claim 2 including the torque variation absorbing couplings as claimed in claim 1 comprises:

two sets of the torque variation absorbing couplings arranged so as to face each other in the axial direction, thereby constituting a torque variation absorbing power transmission system; and

two sets of the power transmission rotation bodies so arranged as to face each other to be rotated like a single block.

(Operation)

In the torque variation absorbing coupling as claimed in claim 1 according to the present invention, as configured as above;

For example, when an inner rotation body is rotated in a given one-way direction with the inner rotation body connected to the driving (or prime mover) side of a power transmission system and the power transmission rotation body connected to the load side, each slanted intermediate rotation body is keeping a line contact with the inner rotation body while being guided by the inner rotation body to rotate about itself and the central axis of the coupling (or the inner rotation body). Therefore, the outer rotation body in line contact with the intermediate rotation bodies is guided by the intermediate rotation body not only to advance in the axial direction so as to narrow the raceway spacing based on the taper screw principle, but also to generate a relative torsional angle with the inner rotation body, thus causing the intermediate rotation bodies to be locked in the raceway by wedge action, resulting in a torque corresponding to the advancement or the torsion angle to be transmitted from the inner rotation body through the outer rotation body and the power transmission rotation body to the load side.

Then, when torsional vibration or other factors cause a relative torsion angle of the inner rotation body to be reduced, a strong action to be produced when a wedge is being pulled out will cause the transmission torque to be decreased more sharply than in the case when the torsion angle is increased. As a result, when a transmission torque is being decreased, only a part of strain energy due to an increased torsion angle stored in the coupling when the torque is increased can be restored in the power transmission system, thus permitting the coupling to absorb a good part of a large energy to be generated by vibration or other factors.

Further, in a power transmission system as claimed in claim 2 including the torque variation absorbing couplings according to the present invention, as configured as above;

Since two sets of the torque variation absorbing couplings are arranged so as to face each other in the axial direction respectively on the driving and driven sides, two sets of the power transmission rotation bodies so arranged as to face each other on the driving and driven sides are rotated like a single block toward the same normal or reversal direction, thus absorbing torsional vibration in either rotational case to transmit a smooth torque.

(Brief Description of the Drawings)

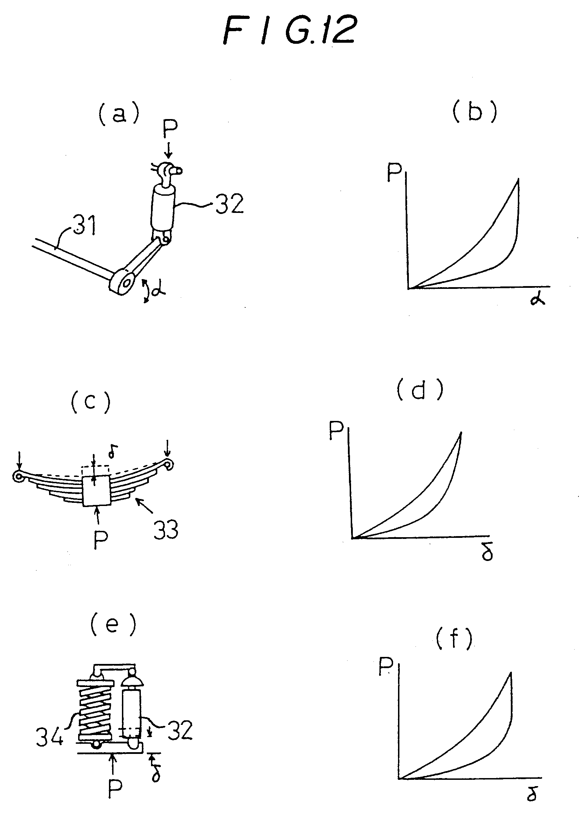

Now preferable embodiments of the torque absorber according to the present invention will be described, referring to the accompanying drawing (Figs. 1 to 17):

Fig. 1 is a sectional view showing an embodiment of a torque variation absorbing coupling according to the invention;

Fig. 2 is a perspective sectional view showing the arrangement of the main components in the above embodiment;

Fig. 3 is a perspective view showing the arrangement of the intermediate rotation bodies;

Figs. 4 (a) and (b) show an action of tapered screw;

Fig. 5 is characteristic curves showing typical changes in transmission torque in the embodiment;

Figs. 6 and 7 are sectional views showing other embodiments of a torque variation absorbing coupling according to the present invention;

Fig. 8 is characteristic curves showing typical changes in transmission torque in the embodiment shown in Fig. 7;

Figs. 9, 10 and 11 are schematic diagrams for determining a raceway surface shape;

Fig. 12 (a) to (f) show the construction and performance of the conventional devices having non-linear spring characteristics.

(Embodiments)

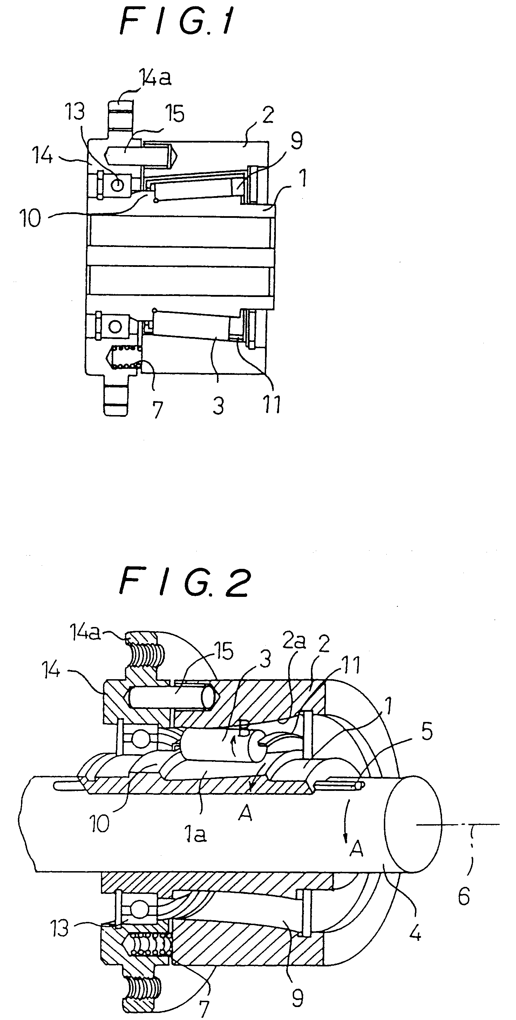

First, the configuration of a torque variation absorbing coupling according to the present invention will be described using the sectional and perspective views shown in Figs. 1 to 3.

In the drawings: An inner ring 1 embodying the inner rotation body is mounted firmly on a shaft 4, which may be the input shaft or the output shaft of the coupling, by e.g., a key engagement 5. An outer ring 2 embodying the outer rotation body is disposed facing the inner ring 1 to form a raceway 9 between them.

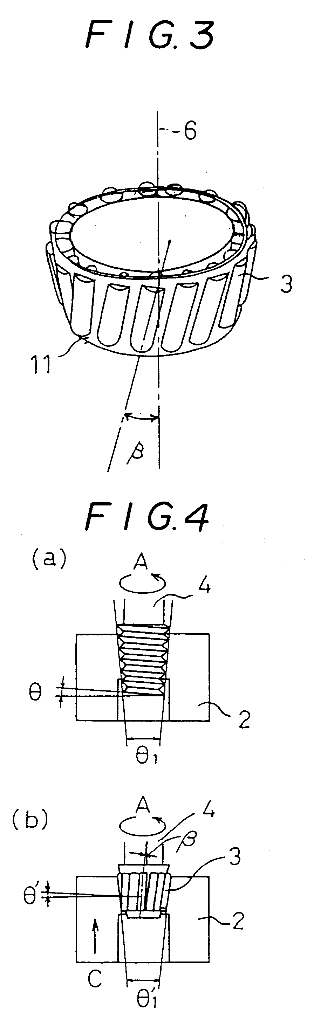

A plurality of rollers 3 embodying the intermediate rotation body are, as shown in Fig. 3, disposed in the raceway 9 slanting to a plane including a central axis 6 of the inner ring 1 (or the output or input shaft 4) at angle $\beta$ (e.g., 15°).

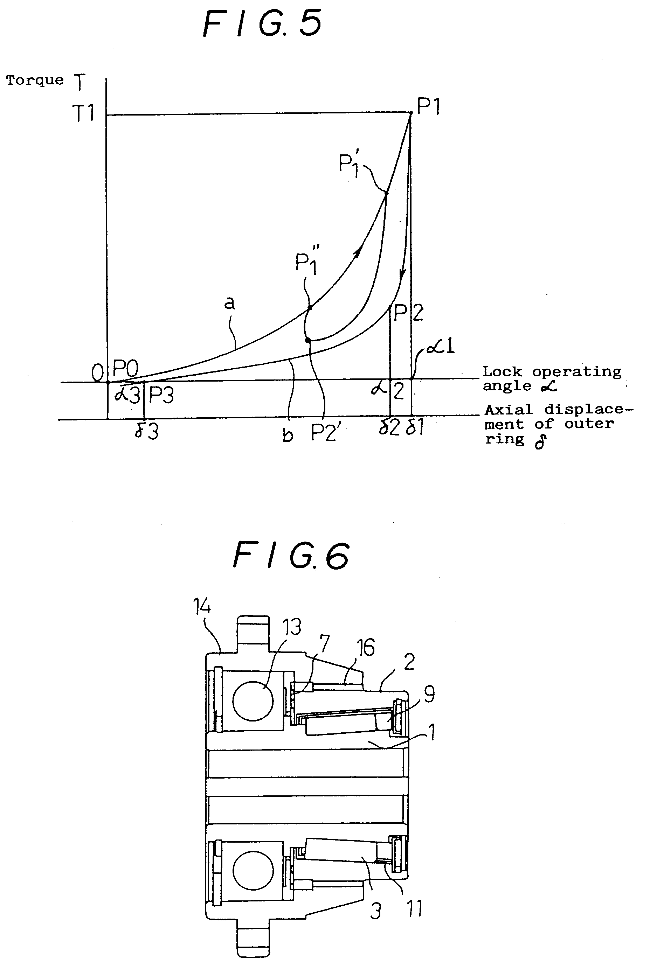

On one side (e.g., left side as shown in Fig. 1) of the inner ring 1 (which is also at the left side end of the outer ring 2), a bearing 13 is mounted to carry the radial load of the output shaft or the input shaft and the thrust load of a spring plate 7 embodying the energizing means (Fig. 6). On the bearing 13 is mounted a housing 14 embodying the power transmission rotation body in order to transmit a torque to the output shaft of the coupling. The housing 14 can rotate around the bearing 13, but the axial movement of the housing 14 is restricted by the bearing 13, so that it remains at a constant position relative to the inner ring 1. The outer ring 2 is connected with the housing 14 so as to rotate integrally, but movably in the axial direction, through a torque transmission means such as a torque transmission pin 15, or an involute spline 16 (Fig. 6) or a ball spline (not shown). The housing 14 can be an input side or output side of the coupling by inserting mounting bolts into a flange 14a for connection.

The spring plate 7 (Fig. 6) or a coil spring used for energizing means is located in between the housing 14 and the outer ring 2, to push away the outer ring 2 all the time to a direction so as to narrow a gap of the raceway 9 (in Fig. 1, left to right).

The inner ring 1 is provided with a flange 10, to restrict and axial movement of the rollers 3, when the inner ring 1 rotates in the direction for losing the transmission torque and the rollers 3 advance so far in the axial direction in the gap of the raceway 9 as to widen the gap.

In Fig. 3, the rollers 3 are arranged on the inner ring 1 so as to slant to a section including the axis 6 thereof by an angle of $\beta$. The rollers 3 are retained in place by a retainer 11 to keep off each other. This configuration can prevent adjacent rollers 3 (each rotating about its axis in a same direction) from running against each other with a relative tangential speed in an opposite direction, resulting in a smooth rotation of the rollers 3 about their axes and a smooth revolution thereof around the inner ring 1.

Here, let us assume that the shaft 4 is the input shaft, and the shaft 4 rotates the inner ring 1 in the A direction in Fig. 2. Then, this configuration of torque absorber causes the rollers 3 to be guided toward the inner ring raceway track 1a and be going up thereon while each rotating in the B direction, resulting in the rightward movement. Since the rollers 3 would move to the left direction relative to the outer ring raceway track 2a, the outer ring 2 is guided by the rollers 3 (being guided toward the inner ring raceway track 1a) and moves to the right direction under the energizing force of the spring 7 so as to narrow the raceway 9 gap. As a result, the rollers 3 are locked between the rings 1 and 2 by a wedge action, resulting in a torque to be transmitted to the housing 14 or the output side from the input shaft 4 through the torque transmission pin 15.

As for the surface contact of the rollers with the inner and outer rings 1 and 2, a convexed portion of a roller 3 contacts with a concaved portion of the outer ring raceway track 2a, while a convexed portion of a roller 3 contacts with a convexed portion of the inner ring raceway track 1a. As a result, a contact surface pressure between the rollers 3 and the inner ring raceway track 1a is larger than that between the rollers 3 and the outer ring raceway track 2a and, therefore, the rollers are guided by the inner ring raceway track 1a.

Figs. 4 (a) and 4 (b) are schematic diagrams showing the action of the torque absorber introduced by such movements of the inner and rings 1 and 2 and the rollers 3: The action is similar to the one caused by the taper screw shown in Fig. 4 (a). As shown in Fig. 4 (b), when the screw (or roller) 3 or the shaft 4 is rotated in the direction A, the outer ring 2 advances toward the direction C through the roller 3, thus causing the outer ring 2 to be locked with the shaft 4 as if a rotated taper screw is locked with the mating thread. In this case, a lead angle $\theta$ and a taper angle $\theta 1$ of the taper screw correspond to a twist lead angle $\theta'$ (equivalent to the slant angle $\beta$ of the roller 3) and a contact angle $\theta' 1$ of the torque absorber.

When the shaft 4 is rotated in a direction reverse to arrow A in Fig. 2, or when a torsional angle between the inner and outer rings 1 and 2 is momentarily reduced or locked condition of them works loose becasue of torsional vibrations or torque variations, an action reverse to the above described action works on them. In other words, the reverse rotation of the shaft 4 causes the rollers 3 also to advance in the reverse direction, which moves the outer ring 2 against the energized force of the spring 7 so as to widen the raceways 9. Therefore, the inner and outer rings 1 and 2 may rotate free in opposing directions to each other, or may rotate in the same direction under loosened locking condition and reduced transmission torque.

Fig. 5 is characteristic curves showing typical changes in transmission torque in the embodiment.

In the Fig. 5, in order to simplify the explanation, let us assume that the spring 7 is provided only to remove a play of the inner ring 1, so taht the spring force is not so strong as to contribute to the torque transmission between the inner and outer rings 1 and 2.

The abscissa in Fig. 5 shows an axial displacement $\delta$ or a locking action angle $\alpha$ of the outer ring 2, or a relative torsional angle between the inner and outer rings 1 and 2. The ordinate shows a torque T transmitted between the inner and outer rings 1 and 2 or the shaft 4 and the housing 14 corresponding to value of $\delta$ or $\alpha$. In this case, since the inner and outer rings 1 and 2 work as a tapered screw and a mating threaded hole, a displacement $\delta$ is in a linear proportion with a corresponding torsional angle $\alpha$.

A curve "a" in Fig. 5 shown how a transmission torque increases when the shaft 4 or the inner ring 1 is rotated in a direction of arrow A in Fig. 2, that is in a direction to lock the inner and outer rings 1 and 2. The magnitude of transmission torque between the inner and outer rings 1 and 2 is proportional to the magnitude of a wedge action caused by the rollers 3 caught in between the inner and outer rings 1 and 2, which may take place when the outer ring 2 is twisted relatively to the inner ring 1 and advances toward the inner ring 1 so as to narrow the gap of the raceway.

When a raceway gap narrows down proportionally to a displacement $\delta$, not only the outer ring 2 will expand but also a local portion of the rollers 3 in contact with the inner and outer rings 1 and 2 will deform. Since a force to expand the outer ring 2 is equivalent to an internal pressure acting on the inner and outer rings 1 and 2 to widen the raceway gap, the force will be in reverse proportion to a raceway gap or in proportion to a displacement $\delta$. On the other hand, since a force to deform the rollers 3 locally may change on a 2-D basis because the contact surface area may increase as the gap narrows down. Since the both forces absorb the displacement $\delta$ or the torsional angle $\alpha$, the relation between torque T and torsional angle $\alpha$ may be expressed by the following quadratic equation:

$$T = C_1 \alpha^2 + C_2 \alpha \qquad (C_1, C_2 \text{ are constants})$$

As apparent by curve "a" in Fig. 5, a transmission torque T has a characteristics like a non-linear torsional spring. More particularly, even if a sudden large torque is loaded to the output side, first there may take place a large angular displacement to absorb the shock torque, and then a transmission torque may rise gradually up to the rated transmission torque capacity $T_1$ as shown in Fig. 5. $P_1$ designates a point of the rated transmission torque.

The curve "b" shows how a transmission torque will drop when output load is suddenly lost from the rated torque $T_1$. More particularly, first the rated torque $T_1$ will drop sharply, and then gradually approaches zero, when the shaft 4 or the inner ring 1 may turn in the reverse direction (in a direction opposite to arrow A in Fig. 2). In this case, due to a sudden loss of the wedge action, when axial displacement $\delta$ or relative torsional angle $\alpha$ be reduced slightly, a transmission torque T amy drop more sharply (like a curved segment $P_1 P_2$) than when it rises, then gradually approaches near zero or point $P_3$.

The reason why is as follows: When a transmission torque is rising by an input of torque load, a significant pushing force is required against a reaction force on the slanting surface under the wedge action, while when a transmission torque is falling by a loss of torque load, the reaction force on the slanting surface may help reduce the pull-out force. In this case, point $P_3$ may show a hysteresis, thus causing a slip ratio $\alpha_3/\alpha_1$ to produce a certain residual displacement of 2 to 3%. Such residual displacement may take place when the torque is inputted/relieved, the then locking position of the rollers 3 and the inner/outer rings 1 and 2 may shift a little each time, but such a degree of residual displacement involves no practical problems on the performance of the coupling because of the self-aligning property of the rollers 3. Such characteristics of the coupling as described above can be theoretically derived from the wedge action, and also has been proved by experiments.

As a result, if a torque variation or torsion vibrations may occur in the power transmission system, the displacement $\delta$ or the torsion angle $\alpha$ may change in an area enclosed by the curves "a" and "b" corresponding to the magnitude of the varying torque to absorb the torque variation.

For example, when first a torque is loaded along the curve "a" from $P_0$ to $P_1$, and then removed along the curve "b" from $P_1$ to $P_0$, during the time when torque is added, the coupling stores a strain energy corresponding to the area enclosed by a line $P_0$ - curve "a" - $P_1$ - $\alpha_1$ - $P_0$, while during the time when torque is removed, the coupling feedbacks to the power system a strain energy corresponding to the area enclosed by a line $P_0$ - curve "b" - $P_1$ - $\alpha_1$ - $P_0$. Therefore, after all, an energy corresponding to the area enclosed by the curves "a" and "b" has been absorbed in the coupling.

And, assume that the coupling is operating at a torque $P_1'$ (less than the rated torque $P_1$) and then the torque drops to $P_2'$ and returns again to $P_1'$ due to torsional vibration or other temporary shock. In the meantime, after all, an energy corresponding to the area enclosed by $P_1'$ - $P_2'$ - $P_1''$ - $P_1'$ would be

absorbed in the coupling.

Such energy absorbing action is made smoothly, thus allowing the coupling to absorb a large energy in each cycle of torsional vibrations or torque variation, leading to a significant attenuation of vibrations or shocks.

As the device according to the prior art which have non-linear spring characteristics, such devices have been popular as a combination of the torsion bar 31 and the shock absorber 32 and a combination of the laminated spring 33, coil spring 344 and shock absorber 32 as shown in Fig. 12. The torque variation absorbing coupling according to the invention as described above can have a similar shock absorbing performance to the prior art with the small size of the coupling and the simple configuration of the rolling bearings.

Fig. 6 is a sectional view showing another cmbodiment of a torque variation absorbing coupling according to the present invention; This embodiment uses an involute spline 16 rather than the torque transmission pin 15 shown in Fig. 1, as a torque transmission means.

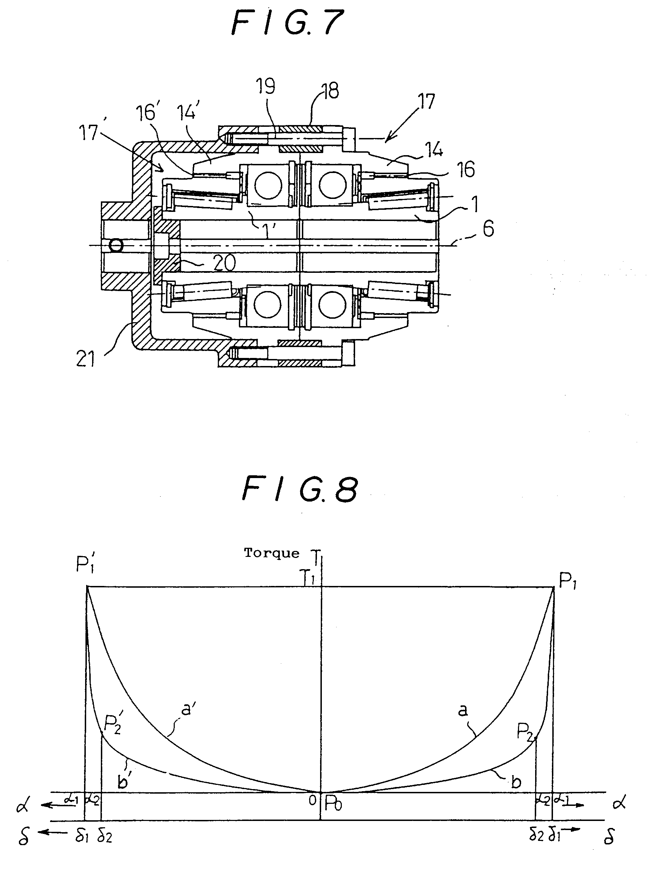

Fig. 7 is a sectional view showing a torque variation absorbing power transmission system as claimed in claim 2:

Main components in the power transmission system are two sets of the torque variation absorbing couplings shown in Fig. 6. A pair of the torque variation absorbing couplings 17, 17' are so arranged as to face each other in a direction of a common axis 6. Housings 14, 14' of the torque variation absorbing couplings 17, 17' are connected by bolting 19 via a spacer 18 to be rotated like a single block.

An input shaft (or an output shaft) as a power transmission system is connected to inner rings 1, 1' facing each other with a shaft fixing flange 20. A mounting flange 21 is provided on the housing 14', to which the output shaft (or the input shaft) is fixed.

In this connection, such a torque transmission means as a torque transmission pin 15 or a ball spline may be used in place of the involute spline 16.

According to the power transmission system, since the action described above referring to Fig. 5 can work either in the normal rotation direction of a power system or the reverse rotation direction, this power transmission system can be used in a power system which rotates in two (normal and reverse) directions.

Fig. 8 is characteristic curves showing typical changes in transmission torque in the embodiment shown in Fig. 7;

In this case also, like the case shown in Fig. 5, let us assume that a spring 7 does not contribute to the torque transmission.

When the torque variation absorbing couplings 17, 17' rotate in the normal direction, and their torques both start at an initial position of point $P_0$ and when the torque variation absorbing coupling 17 is increasing its transmission torque along a curve "a" from $P_0$ to $P_1$, the torque variation absorbing coupling 17' may rotate free without transmitting any torque, while keeping the position of point $P_0$ because of the pushing force of the spring 7. In other words, when the power transmission system is rotated in the normal direction, a possible torque variation is absorbed only by the torque variation absorbing coupling 17, thus transmitting a smooth torque from the input shaft to the output shaft.

On the other hand, when the torque variation absorbing couplings 17, 17' rotate in the reverse direction and the torque variation absorbing coupling 17' is increasing its transmission torque along a curve "a'", the torque variation absorbing coupling 17 may rotate free without transmitting any torque, while keeping the position of point $P_0$.

Now, shapes of the inner and outer ring raceways 1a and 2a required for the line contact of the rollers 3 with them will be described as follows:

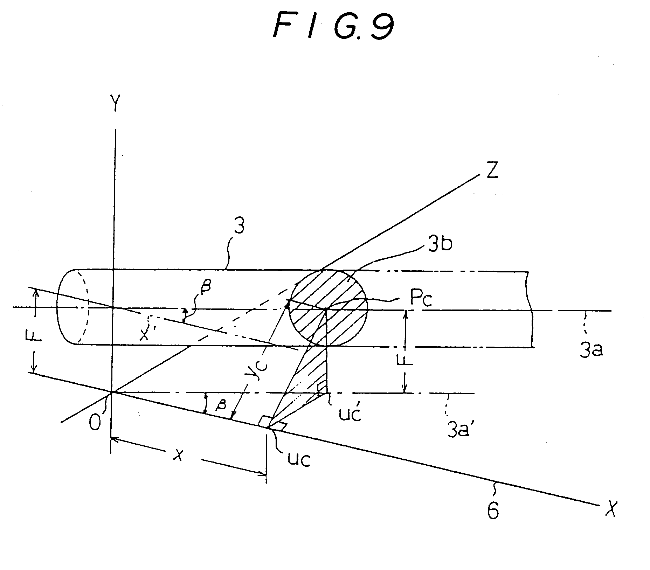

Figs. 9 to 11 are explanatory drawings for determining the raceway surface shapes in the case of cylindrical rollers 3.

Fig. 9 is a perspective view showing X-Y-Z coordinates, in which a roller 3 is so placed that its axis 3a passes through the Y axis a distance F away from the origin O, in parallel to the X-Z plane, slanting to the X-Y plane at an angle of $\beta$. The X axis represent the common axis 6 of the inner and outer rings 1 and 2. The section 3b of the roller 3 shows a section cut by a parallel plane to the Y-Z plane passing the X axis at an arbitrary position x. Points Uc and U'c are respectively intersections with the X axis and the X-Z plane, of perpendiculars drawn from the center Pc of the cross section to the X axis and the X-Z plane. The line 3a' passing the origin O and the point U'c is a projected line of the roller axis 3a to the X-Z plane, forming an angle $\beta$ with the X axis. Apparently referring to Fig. 9,

Distance from Uc to U'c = $x \tan \beta$
Distance from Pc to U'c = F

Therefore, designating a distance from the rotation axis 6 of the rings (or X axis) to the center Pc of the roller 3 as yc,

$yc^2 = F^2 + (x \tan \beta)^2$     Accordingly,

$yc^2 / F^2 - x^2 / (F / \tan \beta)^2 = 1$     (1)

Since the equation (1) is a hyperbola, the axis line of the rollers 3, that is, the center line of the raceway formed with the inner and outer rings 1 and 2 is hyperbolic with respect to the rotation axis 6 of the rings.

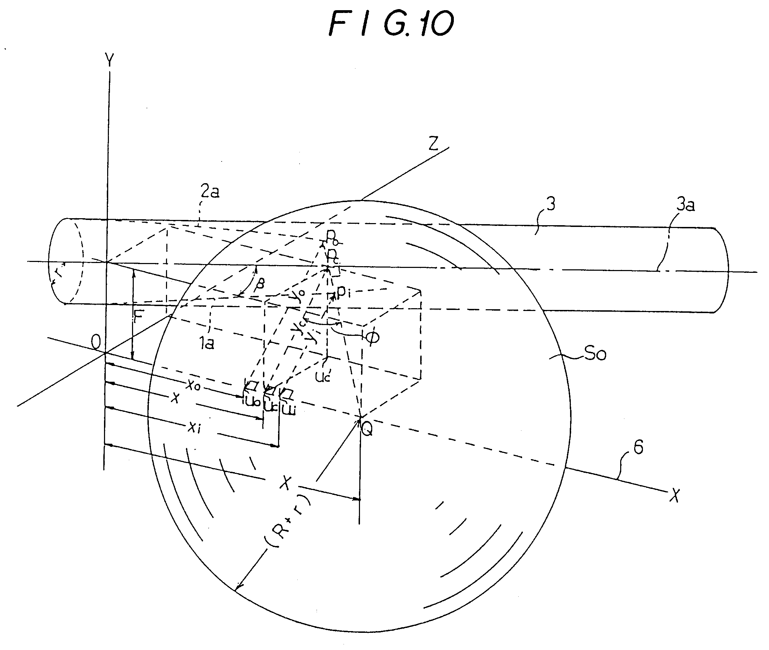

Fig. 10 is a drawing for explaining how the rings 1 and 2 come into contact with the roller 3 arranged as above.

Designate as Q an intersection of the axis X with a plane which passes the center Pc of the roller 3 at right angle with the axis 3a of the roller 3. Considering spheres Si and So (only So is shown in Fig. 10) having the same center Q, which are respectively inscribed and circumscribed to the rollers, contact points Pi and Po of the roller 3 with the spheres Si and So would be on a perpendicular connecting the points Q and Pc, respectively the radius r of the roller 3 apart from the point Pc. Therefore, designating the distance from point Q to point Pc as R, the radii of the spheres Si and So would be respectively (R-r) and (R+r).

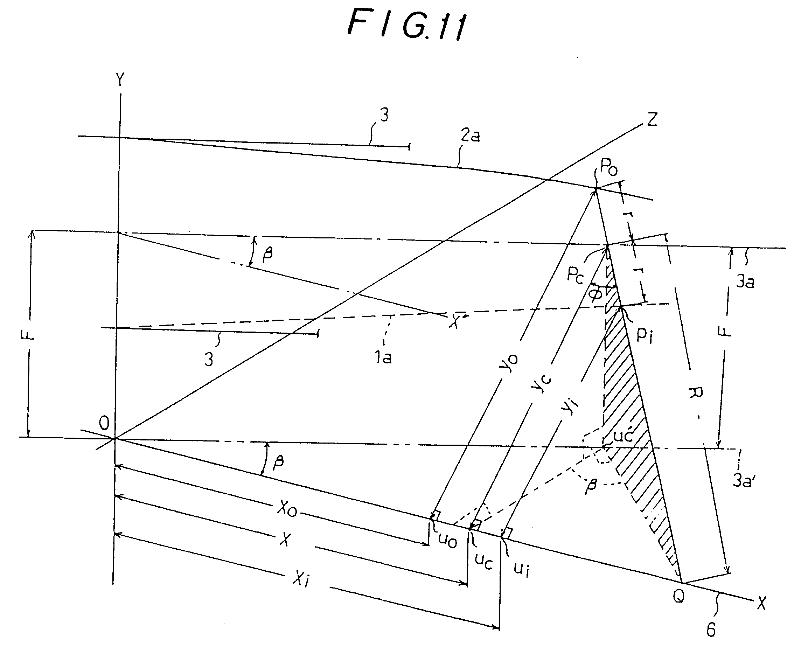

Designating as Ui and Uo the intersections of planes passing the points Pi and Po in parallel to the Y-Z plane with the X axis (see Fig. 11), the lengths yi and yo of the segments PiUi and PoUo are respectively distances from the points Pi and Po to the X axis, and the distances xi and xo from the origin O to the points Ui and Uo are respectively the X axis coordinates of the points Pi and Po. Therefore, functions F (xi, yi) and F (xo, yo) represent the curved surface shapes of the raceway tracks 1a and 2a of the inner and outer rings 1 and 2.

Fig. 11 is an enlarged view showing related portions to the determination of these functions.

Since segment QPc (equal to R) is at right angle with the center axis 3a of the roller 3, and the point U'c is an intersection of the perpendicular from the point Pc to the X-Z plane therewith, segment U'cQ is at right angle with the axis 3a'. Therefore,

Distance from point O to point Q $= (x / \cos \beta) / \cos \beta = x / \cos^2 \beta$

$$R^2 = F^2 + \left\{ (x / \cos^2 \beta ) \sin \beta \right\}^2$$
$$= F^2 + x^2 \tan^2 \beta / \cos^2 \beta$$

Then, designating an angle QPcUc as $\phi$, since triangle QPcUc is a right angle,

$$\cos\phi = \frac{yc}{R} = \frac{\sqrt{F^2 + x^2 \tan^2 \beta}}{\sqrt{F^2 + x^2 \tan^2 \beta / \cos^2 \beta}}$$

$$\sin\phi = \frac{\overline{UcQ}}{R} = \frac{x \tan^2 \beta}{\sqrt{F^2 + x^2 \tan \beta / \cos^2 \beta}}$$

On the other hand, since the length of segments PcPi and PcPo equal r, and triangles QPiUi and QPoUo are similar to triangle QPcUc,

$$xi = x + r\sin\phi = x + xr\frac{\tan^2\beta}{\sqrt{F^2 + x^2\tan^2\beta/\cos^2\beta}} \quad \ldots\ldots (2)$$

$$xo = x - r\sin\phi = x - xr\frac{\tan^2\beta}{\sqrt{F^2 + x^2\tan^2\beta/\cos^2\beta}} \quad \ldots (3)$$

$$yi = yc - r\cos\phi = \sqrt{F^2 + x^2\tan^2\beta}\left(1 - \frac{r}{\sqrt{F^2 + x^2\tan^2\beta/\cos^2\beta}}\right) \cdot (4)$$

$$yo = yc + r\cos\phi = \sqrt{F^2 + x^2\tan^2\beta}\left(1 + \frac{r}{\sqrt{F^2 + x^2\tan^2\beta/\cos^2\beta}}\right) \cdot (5)$$

From these above equations, F (xi, yi) and F (xo, yo) are introduced as follows:

$$yi = \frac{\sqrt{F^2 + x^2\tan^2\beta}\left(1 - \frac{r}{\sqrt{F^2 + x^2\tan^2\beta/\cos^2\beta}}\right)}{x\left(1 + \frac{r\tan^2\beta}{\sqrt{F^2 + x^2\tan^2\beta/\cos^2\beta}}\right)} \, xi$$

$$yo = \frac{\sqrt{F^2 + x^2\tan^2\beta}\left(1 + \frac{r}{\sqrt{F^2 + x^2\tan^2\beta/\cos^2\beta}}\right)}{x\left(1 - \frac{r\tan^2\beta}{\sqrt{F^2 + x^2\tan^2\beta/\cos^2\beta}}\right)} \, xo$$

These equations express only that the inner and outer raceway tracks 1a and 2a have shapes of quadratic curved surface. Obtaining ratios of (xi-x) / (yi-yc) and (xo-x) / (yo-yc), from the equations (2) to (5),

$$\frac{xi - x}{yi - yc} = \frac{r\sin\phi}{-r\cos\phi} = -\frac{x}{yc}\tan^2\beta$$

$$\frac{xo - x}{yo - yc} = \frac{-r\sin\phi}{r\cos\phi} = -\frac{x}{yc}\tan^2\beta$$

Since the relation of x and yc is hyperbolic from the equation (1), and $\tan^2\beta$ in the above equations is constant, the relations of xi and yi as well as xo and yo are hyperbolic. As a result, the inner and outer raceway tracks 1a and 2a are mono-hyperboloids of revolution about the common axis 6.

Assuming for example

$yi^2 / ai^2 - xi^2 / bi^2 = 1$
$yo^2 / ao^2 - xo^2 / bo^2 = 1$

EP 0 551 515 A1

F = 9, r = 1.5, and $\beta$ = 15°, ai, bi, ao and bo are respectively calculated to be 7.5, 30.7, 10.5 and 36.2, thus giving the inner and outer raceway tracks surfaces as mono-hyperboloid.

The above embodiments have a cylindrical rolling surface of the rollers 3, but may be replaced with conical, hourglass or convex drum shape of rolling surface. In this case also, the rollers 3 are brought into line contact with the inner and outer rings 1 and 2. For this reason, in the case of conical rolling surface, since the generating line of a conical roller is a straight line, the inner and outer raceway track surfaces are designed to be mono-hyperboloid of revolution like the case of cylindrical rollers. In the case where a roller surface is produced by rotating a partial arc of an ellipse about the outer axis into hourglass shape, the inner ring is formed into a cylindrical shape and the outer ring is into a combination of elliptic and hyperbolic surfaces of revolution. In the case where a roller surface is produced by rotating a partial arc of an ellipse about the center axis into convex drum shape, the outer ring is formed into a cylindrical shape and the inner ring is into a combination of elliptic and hyperbolic surfaces of revolution.

(Effect)

As described above in detail, with the torque variation absorbing coupling as claimed in claim 1 of the present invention:

The raceway is formed in between the inner and outer rotation bodies, and the intermediate rotation body is arranged slanted to the inner and outer rotation bodies so as to have a line contact with the raceway track, thereby utilizing a tapered screw action to be produced among them. Therefore, the power transmission system including the torque variation absorbing coupling (for which a power system rotates only in a single direction) can absorb a large torque variation by the small-sized and simple-configured (like rolling bearing) coupling.

Further, with the power transmission system as claimed in claim 2 (including the torque variation absorbing couplings):

At least two sets of the torque variation absorbing couplings are arranges so as to face each other, thereby constituting a torque variation absorbing power transmission system. Therefore, the power transmission system including the torque variation absorbing couplings (for which a power system rotates in two normal and reverse directions) can absorb a large torque variation by the small-sized and simple-configured (like rolling bearing) couplings.

**Claims**

1. A torque variation absorbing coupling comprising:

an inner rotation body, an outer rotation body, a plurality of intermediate rotation bodies, an energizing means and a power transmission rotation body;

said inner rotation body being provided with an inner raceway track of mono-hyperboloid of revolution about one axis;

said outer rotation body being provided with an outer raceway track of mono-hyperboloid of revolution about said axis;

said inner raceway track and said outer raceway track being oppositely faced with each other to form a raceway;

the center axis of said intermediate rotation bodies with a cylindrical rolling surface being arranged in a circumferential direction of said raceway at an angle to a cross section including said axis, and the surface of said intermediate rotation bodies being arranged so as to come into linear contact with said inner raceway track and said outer raceway track;

said power transmission rotation body being arranged on one end side of said outer rotation body and around the end side of said inner rotation body through a bearing, so as to be rotatable relative to said inner rotation body while keeping a constant axial position relative to said inner rotation body, and being connected with said outer rotation body by a torque transmission means which transmits a torque between said outer rotational body;

said energizing means being arranged between said power transmission rotation body and said outer rotation body, to energize said outer rotation body in said axial direction so as to narrow down the spacing of said raceway;

said inner rotation body or outer rotation body being provided with a ringlike portion which brings to a stop the movement of said intermediate rotation body in said axial direction so as to widen the spacing of said raceway.

9

2. A torque variation absorbing power transmission system constituted by two sets of a torque variation absorbing couplings comprising:

an inner rotation body, an outer rotation body, a plurality of intermediate rotation bodies, an energizing means and a power transmission rotation body;

said inner rotation body being provided with an inner raceway track of mono-hyperboloid of revolution about one axis;

said outer rotation body being provided with an outer raceway track of mono-hyperboloid of revolution about said axis;

said inner raceway track and said outer raceway track being oppositely faced with each other to form a raceway;

the center axis of said intermediate rotation bodies with a cylindrical rolling surface being arranged in a circumferential direction of said raceway at an angle to a cross section including said axis, and the surface of said intermediate rotation bodies being arranged so as to come into linear contact with said inner raceway track and said outer raceway track;

said power transmission rotation body being arranged on one end side of said outer rotation body and around the end side of said inner rotation body through a bearing, so as to be rotatable relative to said inner rotation body while keeping a constant axial position retative to said inner rotation body, and being connected with said outer rotation body by a torque transmission means which transmits a torque between said outer rotational body;

said energizing means being arranged between said power transmission rotation body and said outer rotation body, to energize said outer rotation body in said axial direction so as to narrow down the spacing of said raceway;

said inner rotation body or outer rotation body being provided with a ringlike portion which brings to a stop the movement of said intermediate rotation body in said axial direction so as to widen the spacing of said raceway, and

two sets of said torque variation absorbing couplings are arranged so as to face each other in said axial direction; and

two sets of said power transmission rotation bodies are so arranged as to face each other and are rotated like a single block.

# F I G. 1

# F I G. 2

# F I G. 3

# F I G. 4

(a)

(b)

# F I G. 5

# F I G. 6

EP 0 551 515 A1

# F I G. 7

# F I G. 8

# F I G.9

F I G. 10

FIG.11

# F I G.12

(a)

(b)

(c)

(d)

(e)

(f)

# INTERNATIONAL SEARCH REPORT

International Application No PCT/JP91/01075

## I. CLASSIFICATION OF SUBJECT MATTER (if several classification symbols apply, indicate all) [6]

According to International Patent Classification (IPC) or to both National Classification and IPC

Int. Cl$^5$   F16D41/06, F16F15/10

## II. FIELDS SEARCHED

| Minimum Documentation Searched [7] | |
|---|---|
| Classification System | Classification Symbols |
| IPC | F16D41/06, 41/07, 41/08, 41/10, F16F15/10 |

Documentation Searched other than Minimum Documentation
to the Extent that such Documents are Included in the Fields Searched [8]

Jitsuyo Shinan Koho             1926 – 1990
Kokai Jitsuyo Shinan Koho       1971 – 1990

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, B2, 1-60698 (NTN Toyo Bearing Co., Ltd.), December 25, 1989 (25. 12. 89), Line 42, column 5 to line 43, column 7 (Family: none) | 1, 2 |
| Y | JP, B1, 51-21093 (Koyo Seiko K.K.), June 30, 1976 (30. 06. 76), Lines 9 to 13, column 3, Fig. 2 & US, A, 3557921 | 1, 2 |
| Y | JP, B2, 58-52092 (Nobuo Takada), November 19, 1983 (19. 11. 83), Line 25, column 3 to line 3, column 5 (Family: none) | 2 |
| A | JP, A, 61-262237 (Romostor Corp. N. V.), November 20, 1986 (20. 11. 86), Line 1, upper left column, page 3 to line 9, upper right column, page 4 & EP, A1, 190017 | 1, 2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| October 21, 1991 (21. 10. 91) | November 5, 1991 (05. 11. 91) |
| International Searching Authority | Signature of Authorized Officer |
| Japanese Patent Office | |

Form PCT/ISA/210 (second sheet) (January 1985)